# EUROPÄISCHE PATENTSCHRIFT

(11) **EP 3 302 921 B1**
(45) Veröffentlichungstag und Bekanntmachung des Hinweises auf die Patenterteilung: **09.08.2023**
(21) Anmeldenummer: 16722174.6
(22) Anmeldetag: 10.05.2016
(51) Int. Cl.: B29B 7/60, B29C 48/08, B29C 48/10, B29C 48/25, B29C 48/27, B29C 48/285, B29C 48/275

(54) **EXTRUSIONSVORRICHTUNG UND EXTRUSIONSVERFAHREN FÜR DIE HERSTELLUNG EINER KUNSTSTOFFFOLIE**
EXTRUSION DEVICE AND EXTRUSION METHOD FOR PRODUCING A PLASTIC FILM
DISPOSITIF D'EXTRUSION ET PROCÉDÉ D'EXTRUSION POUR LA FABRICATION D'UN FILM PLASTIQUE

(30) Priorität: 08.06.2015 DE 102015108975
(43) Veröffentlichungstag der Anmeldung: 11.04.2018
(73) Patentinhaber: Windmöller & Hölscher KG, 49525 Lengerich (DE)
(72) Erfinder: AVERMEYER, Ansgar, 49124 Georgsmarienhütte (DE); KULGEMEYER, Tobias, 49170 Hagen a.T.W. (DE); BUSSMANN, Markus, 45147 Essen (DE); BACKMANN, Martin, 49525 Lengerich (DE)
(86) Internationale Anmeldenummer: PCT/EP2016/060444
(87) Internationale Veröffentlichungsnummer: WO 2016/198222

(56) Entgegenhaltungen:
- EP-A2- 0 318 170
- DE-U1-202004 015 743
- JP-A- H0 639 835
- JP-A- H05 269 822
- JP-A- H08 336 880
- JP-A- H11 254 499
- JP-A- S57 178 734
- JP-U- S63 163 922

## Beschreibung

Die vorliegende Erfindung betrifft eine Extrusionsvorrichtung für die Herstellung einer Kunststofffolie sowie ein Verfahren für das Ablassen eines Einsatzmaterials aus einer Vorlagevorrichtung einer derartigen Extrusionsvorrichtung.

Es ist bekannt, dass Extrusionsvorrichtungen eingesetzt werden, um Kunststofffolien herzustellen. Hierfür werden üblicherweise unterschiedlichste Rezepturen für unterschiedlichste Produkte auf einer Extrusionsvorrichtung sequenziell nacheinander bearbeitet. Daher müssen Materialwechsel zwischen den einzelnen Rezepturen durchgeführt werden. Das bedeutet, dass Einsatzmaterialien aus Vorlagevorrichtungen der Extrusionsvorrichtung abgelassen werden müssen, so dass Folgematerialien als kommende Einsatzmaterialien in Vorlagevorrichtungen eingefüllt werden können.

Nachteilhaft bei den bekannten Extrusionsvorrichtungen ist es, dass das Ablassen üblicherweise in rein manueller Art erfolgt. So wird üblicherweise ein Auffangsack oder ein Auffangbehältnis unter eine entsprechende Vorlagevorrichtung gehalten und das darin enthaltene restliche Einsatzmaterial hinausbefördert in das zugehörige Auffangbehältnis. Dies führt dazu, dass ein Maschinenbediener die ganze Zeit während des Ablassvorgangs dieses Auffangbehältnis in der gewünschten Position halten muss und den Ablassvorgang überwachen muss. Dies führt weiter dazu, dass immer nur eine einzige Vorlagevorrichtung hinsichtlich eines Materialwechsels vom Maschinenbediener bearbeitet werden kann. Eine rein sequenzielle Abarbeitung eines Materialwechsels führt jedoch zu einem sehr hohen Zeitaufwand. Dabei ist insbesondere zu berücksichtigen, dass solche Extrusionsvorrichtungen insbesondere für mehrschichtige Folien eingesetzt werden, so dass auch zwei, drei oder bis zu sieben Extruder eingesetzt werden können, welche jeweils mehrere Vorlagevorrichtungen und insbesondere bis zu sieben oder acht Vorlagevorrichtungen aufweisen können. Da immer eine Vielzahl von Vorlagevorrichtungen bei einem Materialwechsel mit neuen Materialien bestückt werden muss, führt dies zu einem sehr hohen Zeitaufwand und auch zu einer körperlichen Belastung des Maschinenbedieners.

Die Schrift DE 20 2004 015743 U1 offenbart eine Vorrichtung zum Entfernen von Materialresten in Kunststoffverarbeitungsmaschinen wobei mehrere Vorlagenvorrichtungen vorgesehen sind, welche unterschiedliche Materialien enthalten können.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise das Ablassen von Einsatzmaterial beim Materialwechsel zu verbessern und/oder zu erleichtern.

Voranstehende Aufgabe wird gelöst durch eine Extrusionsvorrichtung mit den Merkmalen des Anspruchs 1 und ein Verfahren mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Extrusionsvorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Eine erfindungsgemäße Extrusionsvorrichtung dient der Herstellung einer Kunststofffolie. Hierfür weist die Extrusionsvorrichtung zumindest zwei Vorlagevorrichtungen für die Vorlage von Einsatzmaterial für einen Extruder auf. Dabei ist jede Vorlagevorrichtung mit wenigstens einer Ablassöffnung ausgestattet mit einem Ablassverschluss zum Öffnen und Verschließen der Ablassöffnung. Die zugehörige Ablassöffnung ist darüber hinaus mit einer Behälterschnittstelle ausgestattet für die reversible Befestigung eines Ablassbehälters zum Aufnehmen von aus der jeweiligen Vorlagevorrichtung abgelassen Einsatzmaterials.

Eine erfindungsgemäße Extrusionsvorrichtung ist also zu einem besonders einfachen und vor allem von einem Maschinenbediener unabhängigem Ablassen von Material aus der Vorlagevorrichtung ausgestattet. Die Ablassöffnung kann dabei insbesondere ein Durchbruch oder ein Loch an der Unterseite der Vorlagevorrichtung sein. Ein Ablassverschluss kann zum Beispiel eine Klappe oder eine andere mechanische Einrichtung sein, welche eine Verschluss- bzw. Öffnungsfunktionalität zur Verfügung stellen kann. Dabei ist es unerheblich im Rahmen der vorliegenden Erfindung, ob das Öffnen und Verschließen der Ablassöffnung mit dem Ablassverschluss automatisch oder manuell durchgeführt wird. Bevorzugt ist es, wenn der Ablassverschluss eine automatische Verstellmöglichkeit aufweist, zum Beispiel mithilfe einer kleinen Antriebsvorrichtung.

Wird nun ein Materialwechsel für eine Extrusionsvorrichtung gewünscht, so wird dieser üblicherweise an zwei oder mehr Vorlagevorrichtungen durchgeführt. Bei diesem Ausführungsbeispiel soll auf eine besonders einfache Ausführungsform mit zwei oder mehr Vorlagevorrichtungen Bezug genommen werden. Wird nun der Materialwechsel ausgeführt, so wird mithilfe des Maschinenbedieners ein Ablassbehälter an jeder Vorlagevorrichtung an der zugehörigen Behälterschnittstelle jeder Ablassöffnung befestigt. Sobald dies geschehen ist, kann manuell oder automatisiert betätigt der Ablassverschluss der jeweiligen Ablassöffnung geöffnet werden, so dass nun das Material aus der Vorlagevorrichtung in den Ablassbehälter eingebracht werden kann. Dieses Einbringen kann sowohl durch Schwerkraftförderung als auch durch aktive Unterstützung durchgeführt werden. Erfindungswesentlich ist es nun, dass durch das Vorsehen der Behälterschnittstelle der Ablassbehälter während des Ablasses des Einsatzmaterials aus der Vorlagevorrichtung automatisch in der gewünschten Ablassposition verbleibt. Der Maschinenbediener hat also nun die Freiheit sich zur nächsten Vorlagevorrichtung zu begeben und dort die gleichen Schritte durchzuführen, also einen Ablassbehälter an der zugehörigen Behälterschnittstelle zu befestigen und anschließend den Ablassverschluss in eine geöffnete Position zu bringen. Dies führt dazu, dass parallel an zwei oder mehr Vorlagevorrichtungen der Ablassvorgang des Einsatzmaterials in den Ablassbehälter stattfinden kann.

Durch die voranstehend erläuterte parallele Arbeitsweise wird nun ein sehr großer Zeitgewinn möglich. Insbesondere bei komplexen Ausführungsformen von Folienproduktionsmaschinen, bei welcher eine Vielzahl von Extrusionsvorrichtungen eingesetzt werden, kann nun eine Vielzahl von Vorlagevorrichtungen gleichzeitig hinsichtlich eines Materialwechsels bearbeitet werden. So kann ein Maschinenbediener von Vorlagevorrichtung zu Vorlagevorrichtung gehen und entsprechend Ablassbehälter an den zugehörigen Behälterschnittstellen befestigen. Anschließend kann er entweder manuell oder durch eine Sensorik automatisiert ein Öffnen der Ablassverschlüsse veranlassen, so dass bei jeder Vorlagevorrichtung, an welcher bereits ein Ablassbehälter angeordnet ist, der Ablassvorgang durchgeführt wird. Da üblicherweise der Ablassvorgang in Abhängigkeit des Restvolumens von Einsatzmaterial in der Vorlagevorrichtung sehr lange dauern kann, insbesondere im Bereich von bis zu mehreren Minuten, kann auf diese Weise eine starke Parallelisierung der Arbeitsschritte und insbesondere der Ablassvorgänge durchgeführt werden. Sobald ein Ablassvorgang für eine Vorlagevorrichtung abgeschlossen ist, also sämtliches restliches Einsatzmaterial aus dem Innenraum der Vorlagevorrichtung herausgefördert worden ist, kann die Ablassöffnung durch den Ablassverschluss wieder verschlossen werden. Zu diesem Zeitpunkt ist das Ausbringen und damit das Beenden des ersten Teils der Wechselanforderung abgeschlossen, so dass nunmehr ein Nachfüllen mit einem Folgematerial einer Folgerezeptur durchgeführt werden kann.

Es ist grundsätzlich für eine erfindungsgemäße Extrusionsvorrichtung unerheblich, ob die Ablassbehälter zum Zeitpunkt des Materialwechsels an die jeweilige Behälterschnittstelle angeordnet werden, oder ob dies bereits zu einem früheren Zeitpunkt zur Verfügung gestellt wird. So kann beispielsweise der Maschinenbediener die gefüllten Ablassbehälter direkt nach dem Materialwechsel wieder leeren und die leeren Ablassbehälter wieder in den gewünschten Positionen befestigen. Dies führt dazu, dass eine noch weitere Automation des Materialwechsels durchgeführt werden kann, da nun für das Ablassen des Einsatzmaterials aus der Vorlagevorrichtung nicht mehr darauf gewartet werden muss, bis ein Maschinenbediener den jeweiligen Ablassbehälter in der gewünschten Position an der Behälterschnittstelle befestigt hat.

Neben der Parallelität der Vorgänge, welche den entscheidenden Zeitvorteil mit sich bringt, wird auch eine körperliche Entlastung des Maschinenbedieners erreicht. So ist es nun nicht mehr notwendig, ein entsprechendes Gebinde unterhalb einer Vorlagevorrichtung mit eigener Körperkraft zu halten, bis der Ablassvorgang beendet ist, sondern vielmehr übernimmt die Kraftaufnahme beim Einbringen des abgelassenen Einsatzmaterials die zugehörige Behälterschnittstelle, an welcher der Ablassbehälter befestigt ist.

Es kann von Vorteil sein, wenn bei einer erfindungsgemäßen Extrusionsvorrichtung die Befestigungsschnittstelle neben der Befestigung des Ablassbehälters für die Befestigung einer Rückführvorrichtung für die Rückführung von Einsatzmaterial in ein Lager ausgebildet ist. Ein solches Lager kann zum Beispiel ein Silo sein, welches örtlich distanziert von der Extrusionsvorrichtung angeordnet ist. Für ein entsprechendes Transportieren kann zum Beispiel eine Saugförderung vorgesehen sein. So ist es nun denkbar, insbesondere bei teueren Einsatzmaterialien oder bei großen Mengen von Einsatzmaterial, welches aus der Vorlagevorrichtung abgelassen werden soll, dieses nicht in einem separaten Ablassbehälter aufzufangen, sondern in diesem Sonderfall eine Rückführung in ein Lager zu gewährleisten. Dies führt zu einer deutlichen Reduktion von Abfall während des Materialwechsels. Dabei ist es denkbar, dass die Befestigungsschnittstelle gleiche Befestigungsflächen sowohl für eine entsprechende Rückführvorrichtung, als auch für den Ablassbehälter aufweist. Jedoch kann die Befestigungsschnittstelle auch unterschiedliche Befestigungsflächen aufweisen, so dass unterschiedliche geometrische Ausrichtungen und Abmessungen der Rückführvorrichtung unabhängig von den entsprechenden geometrischen Ausrichtungen und Abmessungen des Ablassbehälters berücksichtigbar sind für die entsprechende Befestigung.

Ein weiterer Vorteil ist es, wenn bei einer erfindungsgemäßen Extrusionsvorrichtung die Ablassöffnung, der Ablassverschluss und/oder die Behälterschnittstelle eine Sensorvorrichtung aufweisen für die Erkennung einer Belegung der Befestigungsschnittstelle. Eine solche Sensorvorrichtung kann im einfachsten Fall ein Betätigungsknopf sein, welcher vom Maschinenbediener manuell betätigt wird, sobald der Ablassbehälter an der Befestigungsschnittstelle angeordnet ist. Bevorzugt weist die Sensorvorrichtung jedoch einen Automatismus auf, so dass mithilfe eines Belegungssensors automatisiert die Belegung der Befestigungsschnittstelle durch den Ablassbehälter erkannt werden kann. Das Ablassen kann dabei vorzugsweise nur in Abhängigkeit eines entsprechenden Sensorsignals starten bzw. freigegeben werden. So kann zum Beispiel eine automatische Öffnungskontrolle des Ablassverschlusses vorgegeben sein, welche den Ablassverschluss erst in die geöffnete Position bringt, wenn ein entsprechendes Freigabesignal von der zugehörigen Sensorvorrichtung die positive Belegung der Befestigungsschnittstelle meldet. Diese Sensorvorrichtung kann sowohl qualitativ, als auch quantitativ ausgebildet sein. So ist es denkbar, dass mithilfe der Sensorvorrichtung nicht nur die reine tatsächliche Belegung der Befestigungsschnittstelle erkannt wird, sondern auch die Art bzw. die Korrektheit des eingesetzten Ablassbehälters in dieser Behälterschnittstelle. Dies führ zu einer weiteren Erhöhung der Sicherheit. Auch kann eine Verschmutzung durch unerwünschtes freies Ablassen in dieser Position verhindert werden. Nicht zuletzt ist es auch denkbar, dass über eine Sensorvorrichtung qualitativ oder auch quantitativ, zum Beispiel in Form eines Wiegesensors, eine bestehende Beladung des Ablassbehälters und damit ein zugehöriger Füllgrad erkannt werden können. Dies verhindert ein unerwünschtes Überlaufen eines zum Teil restbefüllten Ablassbehälters, welcher sich noch in der Belegung einer Befestigungsschnittstelle befinden könnte.

Vorteilhaft ist es ebenfalls, wenn bei einer erfindungsgemäßen Extrusionsvorrichtung die Ablassöffnung ausgebildet ist für eine Schwerkraftförderung beim Ablassen des Einsatzmaterials. Das bedeutet, dass sich die Ablassöffnung vorzugsweise am untersten Abschnitt der gesamten Vorlagevorrichtung befindet bzw. das untere Ende der Vorlagevorrichtung ausbildet. Bevorzugt weisen trichterförmige Flächen auf die Ablassöffnung hin, so dass die Schwerkraftförderung ein geführtes Ausbringen bzw. ein geführtes Ablassen des restlichen Einsatzmaterials aus der Vorlagevorrichtung ermöglicht. Neben einer Schwerkraftförderung ist selbstverständlich grundsätzlich auch eine aktive Förderung, zum Beispiel ein Ausblasen, ein Ausdrücken, ein mechanisches Ausfördern oder auch ein Leersaugen denkbar. Jedoch hat eine reine Schwerkraftförderung den Vorteil, dass die Komplexität des Gesamtsystems durch eine Reduktion der Bauteile deutlich reduziert wird.

Ein weiterer Vorteil ist es, wenn bei einer erfindungsgemäßen Extrusionsvorrichtung die Vorlagevorrichtung eine Dosierschnecke aufweist, wobei aus einer Trichteröffnung eines Wägetrichters das Einsatzmaterial der Dosierschnecke zugeführt wird und der freie Querschnitt der Trichteröffnung zum freien Querschnitt der Ablassöffnung ein Verhältnis von mehr als 1:1 aufweist. Insbesondere ist ein Verhältnis zwischen 1:1 und 0,1:1 vorgesehen. Das bedeutet, dass die Ablassöffnung größer, insbesondere deutlich größer als die Trichteröffnung ausgebildet ist. Als oberer Grenzfall ist dabei die Trichteröffnung hinsichtlich des freien Strömungsquerschnittes gleich oder im Wesentlichen gleich mit dem freien Strömungsquerschnitt der Ablassöffnung ausgebildet. Bei runden Auslässen ist der freie Querschnitt insbesondere durch den zugehörigen Durchmesser charakterisiert. Jedoch sind insbesondere bei Wägetrichtern flussminimierende Einbauten, zum Beispiel Trichtereinsätze in der Trichteröffnung, denkbar, so dass der freie Strömungsquerschnitt auch deutlich komplexer ausgestaltet werden kann. Diese Korrelation des Verhältnisses erlaubt es, dass das Ablassen des Einsatzmaterials aus der Auslassöffnung heraus keinen limitierenden Faktor darstellt, sondern vielmehr ein maximales Öffnen ein entsprechendes maximales Ablassen freigibt. Auf diese Weise wird unerwünschter Staub oder sogar Brückenbildung im Bereich der Dosierschnecke wirkungsvoll vermieden und das Ausbringen beschleunigt.

Ein weiterer Vorteil kann es sein, wenn bei einer erfindungsgemäßen Extrusionsvorrichtung die Vorlagevorrichtung eine Dosierschnecke aufweist und der freie Strömungsquerschnitt der Ablassöffnung größer oder gleich dem freien Strömungsquerschnitt der Dosierschnecke ist. Das bedeutet, dass auch bei einem Reinigungsvorgang der Dosierschnecke kein limitierender Faktor durch die Ablassöffnung zur Verfügung gestellt wird. So kann während des Ausbringens die Dosierschnecke rückwärtsgedreht werden, so dass Einsatzmaterial, welches sich innerhalb der Dosierschnecke befindet, rückwärts aus der Dosierschnecke herausgefördert wird und nun ebenfalls aus der Ablassöffnung herausgefördert werden kann. Auch hier wird ein unerwünschter Stau des Einsatzmaterials beim Ablassen aus der Dosierschnecke wirkungsvoll vermieden.

Weiter von Vorteil ist es, wenn bei einer erfindungsgemäßen Extrusionsvorrichtung an der Behälterschnittstelle ein Ablassbehälter reversibel befestigt ist mit einem Ablassvolumen zur Aufnahme von Einsatzmaterial, welches Ablassvolumen mit einem Wechselfüllstand in der Vorlagevorrichtung im Verhältnis zwischen 1:1,2 und 1:5 steht. Bevorzugt ist ein Bereich des Verhältnisses zwischen 1:1,2 bis 1:1,5. Das bedeutet, dass der Ablassbehälter unterhalb der Ablassöffnung ausreichend groß, jedoch nicht zu groß ist. Die voranstehenden Verhältnisse haben sich als optimierte Korrelation der einzelnen Volumina herausgestellt. So ist insbesondere ein Verhältnis im Bereich zwischen 1:1,2 bis 1:1,5 von Vorteil, da sozusagen der Ablassbehälter 20 % bis 50 % größer ist, als das Restvolumen an Einsatzmaterial, welches sich innerhalb der Vorlagevorrichtung befindet. Dies ist insbesondere sinnvoll, da sich beim Ablassen des Einsatzmaterials aus der Vorlagevorrichtung innerhalb des Ablassbehälters ein Füllkegel ausbilden wird, so dass das Gesamtvolumen des Ablassbehälters während des Ablassens nicht vollständig für das Einsatzmaterial zur Verfügung steht. Vielmehr verbleibt am oberen Ende seitlich des Füllkegels ein Restvolumen übrig, welches als Hohlvolumen nicht mehr einem weiteren Füllen zur Verfügung steht. Das vergrößerte Vorsehen des Ablassbehälters vermeidet nun für einen solchen Fall ein Überlaufen des Ablassbehälters und insbesondere auch ein Zurückdrücken von Einsatzmaterial in den Innenraum der Vorlagevorrichtung.

Vorteilhaft ist es ebenfalls, wenn bei einer erfindungsgemäßen Extrusionsvorrichtung die Ablassöffnung und/oder der Ablassverschluss hinsichtlich der Ablassgeschwindigkeit verstellbar ausgebildet ist. Neben einer reinen Öffnungsposition und einer reinen Verschlussposition sind damit auch Zwischenpositionen für den Ablassverschluss denkbar, so dass entsprechend dem Prinzip eines variablen Ventils unterschiedlich schnelle Ablassgeschwindigkeiten erzielbar sind. Dies ist insbesondere mit Bezug auf eine entsprechende Staubbildung bei besonders feinen oder staubanfälligen Granulaten als Einsatzmaterial vorteilhaft, um eine Explosionsgefahr oder einfach nur unerwünschte Verschmutzung in der Umgebung des Ablassbehälters zu vermeiden.

Ein weiterer Gegenstand der vorliegenden Erfindung ist ein Verfahren für das Ablassen eines Einsatzmaterials aus einer Vorlagevorrichtung in eine Extrusionsvorrichtung gemäß der vorliegenden Erfindung, aufweisend die folgenden Schritte:
- Erkennen einer Wechselanforderung für das Ablassen des Einsatzmaterials,
- Befestigen eines Ablassbehälters an der Befestigungsschnittstelle der Ablassöffnung einer Vorlagevorrichtung,
- Öffnen des Ablassverschlusses der Ablassöffnung mit dem befestigten Ablassbehälter,
- Wiederholen der beiden voranstehenden Schritte für wenigstens eine weitere Vorlagevorrichtung.

Die voranstehenden Schritte werden insbesondere für alle Vorlagevorrichtungen, vorzugsweise alle Vorlagevorrichtungen, für die ein tatsächlicher Materialwechsel durchgeführt werden soll, wiederholt. Auf diese Weise können selbstverständlich ungenutzte Vorlagevorrichtungen ohne Materialwechsel von diesem Verfahren unberührt bleiben. Ein derartiges Verfahren bringt die gleichen Vorteile mit sich, wie sie ausführlich mit Bezug auf eine erfindungsgemäße Extrusionsvorrichtung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Extrusionsvorrichtung im Betriebszustand,
- Fig. 2: die Ausführungsform der Fig. 1 während des Absenkens des Füllstandes,
- Fig. 3: die Ausführungsform der Fig. 1 und 2 beim Erreichen des Füllstandes an einem Wechselfüllstand,
- Fig. 4: die Ausführungsform der Fig. 1 bis 3 beim Halten eines Wechselfüllstandes,
- Fig. 5: das Ausbringen des Einsatzmaterials aus den Vorlagevorrichtungen,
- Fig. 6: die Größenverhältnisse im Bereich einer Dosierschnecke und
- Fig. 7: eine alternative Ausführungsform einer Extrusionsvorrichtung.

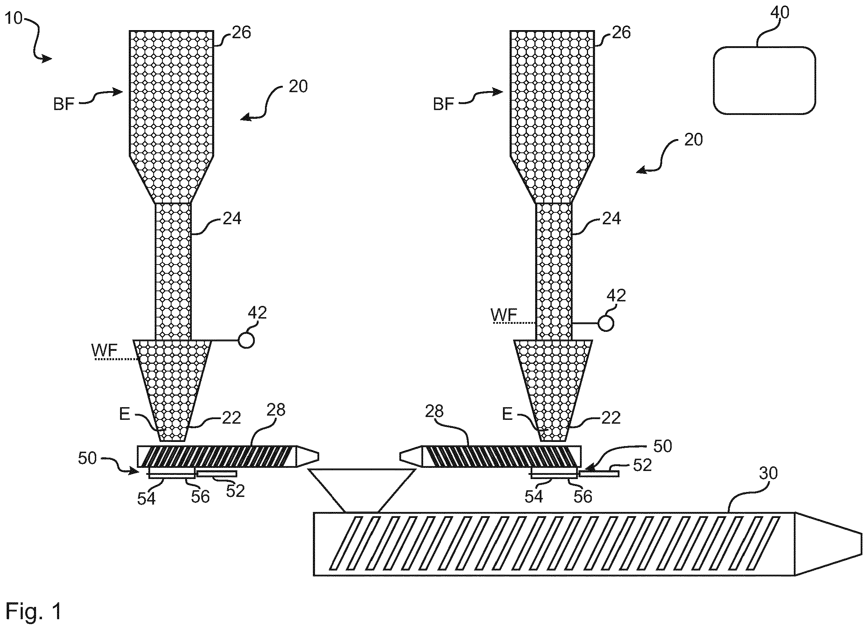

Die Fig. 1 bis 5 zeigen schematisch eine Ausführungsform einer erfindungsgemäßen Extrusionsvorrichtung 10, welche hier mit zwei Vorlagevorrichtungen 20 ausgestattet ist. Beide Vorlagevorrichtungen 20 weisen einen Vorlagebehälter 26 auf, welcher nach unten das Einsatzmaterial E in ein Fallrohr 24 führt. Unten abschließend befindet sich ein Wägetrichter 22, aus welchem mithilfe einer Dosierschnecke 28 das Einsatzmaterial E einem Extruder 30 zugeführt werden kann.

Die Fig. 1 zeigt die Betriebssituation, bei welcher ein Betriebsfüllstand BF als Füllstand F für das Einsatzmaterial E vorgesehen ist. Mithilfe einer Kontrollvorrichtung 40 kann ein Verfahren zur Füllstandsregelung und zur weiteren Regelung der gesamten Extrusionsvorrichtung 10 durchgeführt werden. Wird ein Materialwechsel vorgesehen, so ist insbesondere ein vorheriges Reduzieren der Füllstände F in den Vorlagevorrichtungen 20 sinnvoll.

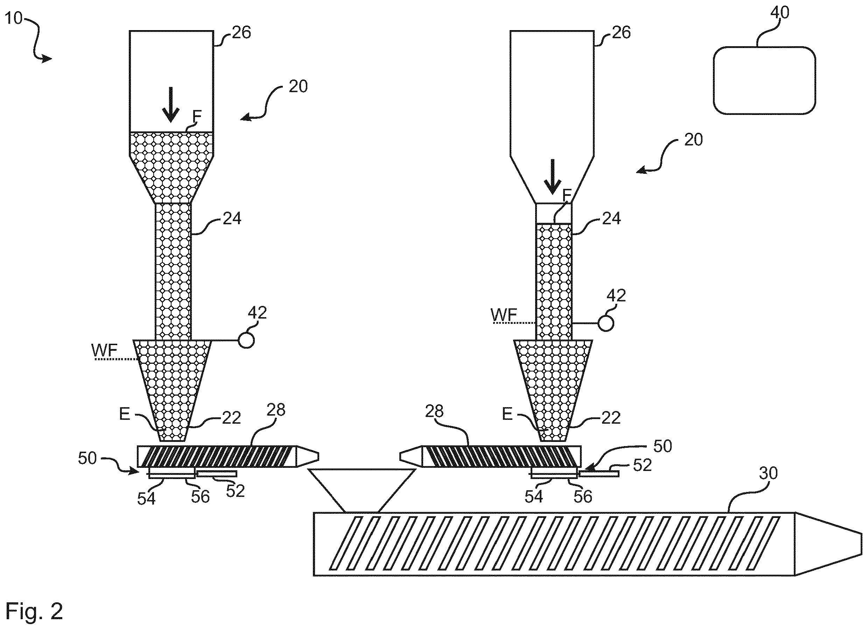

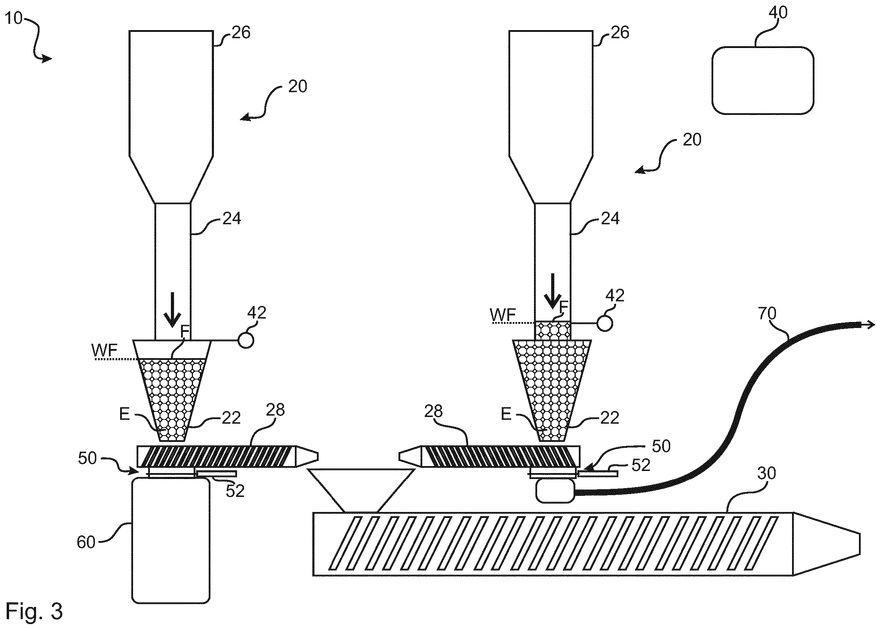

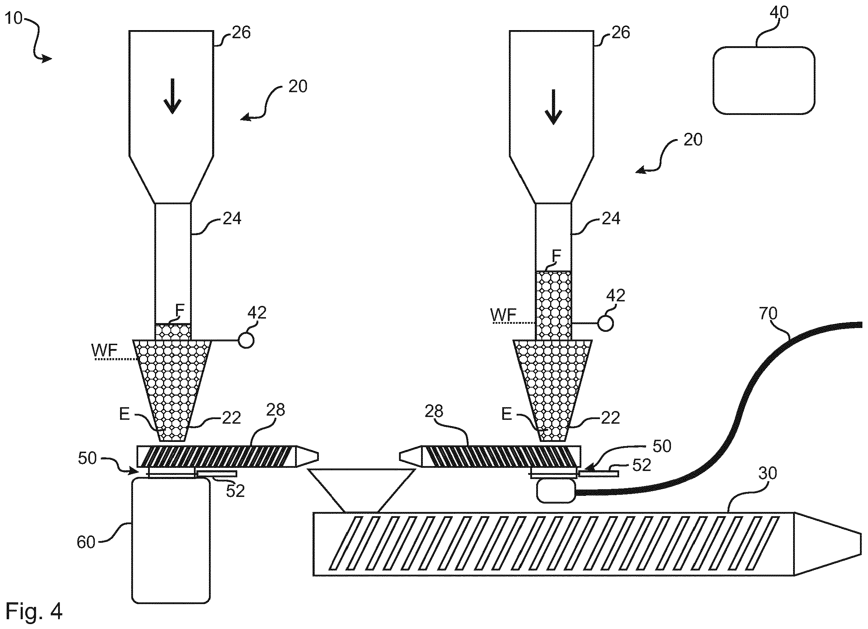

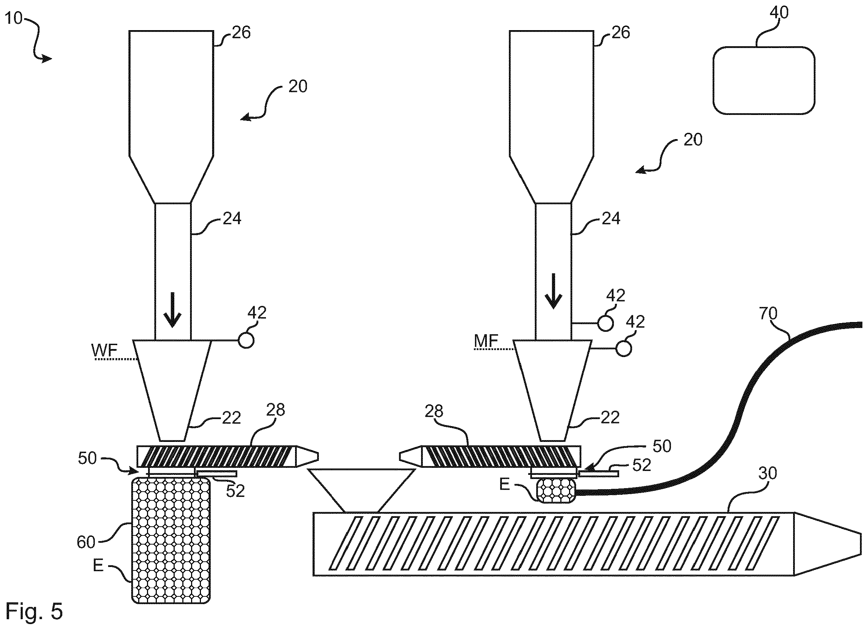

Wird ein Materialwechsel erkannt, so kann nun der Füllstand F innerhalb der Vorlagevorrichtungen 20 abgesenkt werden, insbesondere bis ein Wechselfüllstand WF erreicht wird, wie es die Fig. 3 zeigt. Während des Absenkens gemäß Fig. 2 sind Füllstandssensoren 42, welche direkte Füllstandssensoren oder indirekte Füllstandssensoren 42 in Form eines Wiegesensors an der linken Vorlagevorrichtung 20 sein können, aktiv. Sobald der Wechselfüllstand WF erreicht ist, kann ein Halten auf diesem Wechselfüllstand, insbesondere durch schubweises Nachfördern, durchgeführt werden, wie dies zum Beispiel die Fig. 4 zeigt. Fig. 5 stellt dar, wie zwei unterschiedliche Möglichkeiten des Ablassens durchgeführt werden können. So ist bei dieser Extrusionsvorrichtung 10 jede Vorlagevorrichtung 20 mit einer Ablassöffnung 50 ausgestattet, welche den unteren Abschluss der Vorlagevorrichtungen 20 ausbildet. Mithilfe einer nicht näher dargestellten Ventilmechanik kann ein Ablassverschluss 52 geöffnet und geschlossen werden. Gleichzeitig ist an der Ablassöffnung 50 eine Behälterschnittstelle 54 vorgesehen, an welcher ein entsprechender Ablassbehälter 60 und/oder eine entsprechende Rückführvorrichtung 70 angeordnet werden kann. Die Anordnung wird in den Fig. 3 und 4 gezeigt. Sobald der Materialwechsel durchgeführt werden soll, insbesondere in Abhängigkeit einer positiven Belegungsabfrage einer Sensorvorrichtung 56, welche das Vorhandensein und die Korrektheit eines Ablassbehälters 60 bzw. einer Rückführvorrichtung 70 erkennt, kann nun der Ablassvorgang durchgeführt werden. Das Einsatzmaterial E wird durch Schwerkraftförderung abgelassen und füllt somit den Ablassbehälter 60 aus. Bei der rechten Vorlagevorrichtung 20 erfolgt insbesondere saugunterstützt eine Rückführung mithilfe der Rückführvorrichtung 70 in ein zugehöriges Lager oder Silo. Zu diesem Zeitpunkt sind nun die Vorlagevorrichtungen 20 leer und können, insbesondere nach einem zusätzlichen Reinigungsschritt, mit einem nachfolgenden Material als Folgematerial befüllt werden.

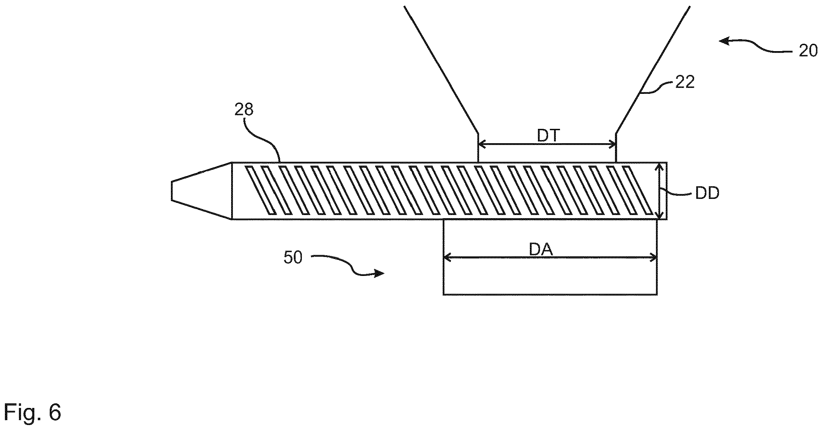

Um das Ablassen des Einsatzmaterials E besonders effizient gestalten zu können, zeigt die Fig. 6 vorteilhafte Durchmesserverhältnisse bzw. Verhältnisse freier Querschnitte. In der Fig. 6 ist zu erkennen, dass die Vorlagevorrichtung 20 mit einem Wägetrichter 22 mit einer Trichteröffnung ausgestattet ist, welche einen freien Querschnitt DT aufweist. Die Ablassöffnung 50 ist mit einem freien Querschnitt DA ausgestattet, und eine Dosierschnecke 28 und weist einen freien Querschnitt von DD auf. Wie hier zu erkennen ist, sind Verhältnisse ausgebildet, welche dazu führen, dass der freie Querschnitt DA der Ablassöffnung 50 größer ist, als der freie Querschnitt DT der Trichteröffnung des Wägetrichters 22 und größer ist als der freie Querschnitt DD der Dosierschnecke 28. Diese Durchmesserverhältnisse bzw. Verhältnisse der freien Querschnitte führen dazu, dass in besonders einfacher und kostengünstiger Weise eine Staubildung im Bereich der Dosierschnecke 28 vermieden werden kann.

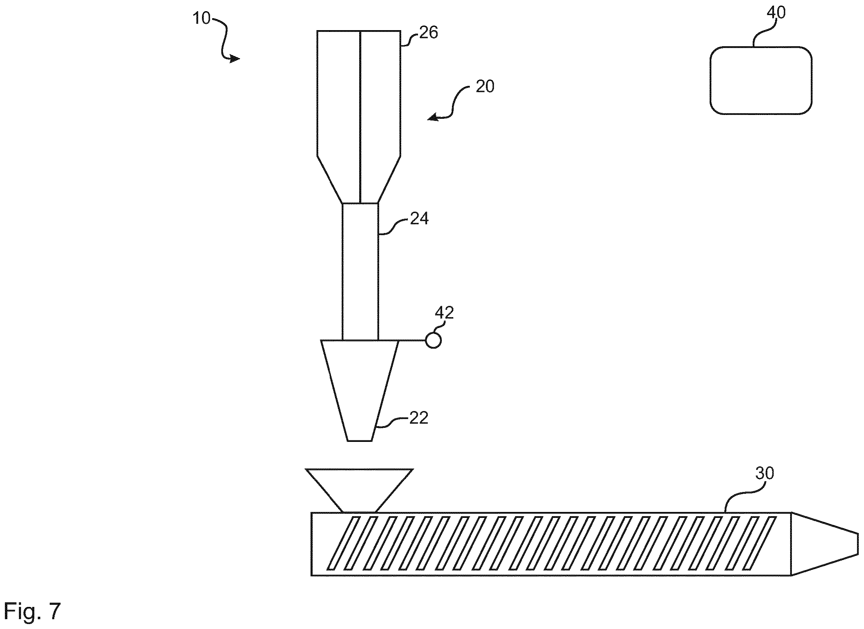

Die Fig. 7 zeigt eine alternative Ausführungsform einer Extrusionsvorrichtung 10. Diese basiert hinsichtlich der erfindungsgemäß beschriebenen Vorteile auf der Ausführungsform der Fig. 1, unterscheidet sich jedoch durch die Nachfüllfunktion. So ist hier ein sogenannter Batch-Prozess für das Nachfüllen vorgesehen. Der Vorlagebehälter 26 ist mit getrennten Volumina ausgestattet, so dass jedes Volumina des Vorlagebehälters 26 als eine Vorlagevorrichtung 20 verstanden werden kann. Darunter angeordnete Bauteile in Form des Fallrohrs 24 und des Wägetrichters 22 sind somit gemeinsame Bauteile der unterschiedlichen Vorlagevorrichtungen 20. Unterhalb des Wägetrichters 22 ist ein Mischtrichter, insbesondere mit einem Mischerantrieb, vorgesehen, welcher eine Homogenisierung vor dem Eintritt in den Extruder erlaubt.

Die voranstehende Erläuterung der Ausführungsformen beschreibt die vorliegende Erfindung ausschließlich im Rahmen von Beispielen. Selbstverständlich können einzelne Merkmale der Ausführungsformen, sondern technisch sinnvoll, frei miteinander kombiniert werden, ohne den Rahmen der vorliegenden Erfindung zu verlassen.

### Bezugszeichenliste

- 10: Extrusionsvorrichtung
- 20: Vorlagevorrichtung
- 22: Wägetrichter
- 23: Trichteröffnung
- 24: Fallrohr
- 26: Vorlagebehälter
- 28: Dosierschnecke
- 30: Extruder
- 40: Kontrollvorrichtung
- 42: Füllstandssensor
- 50: Ablassöffnung
- 52: Ablassverschluss
- 54: Behälterschnittstelle
- 56: Sensorvorrichtung
- 60: Ablassbehälter
- 62: Ablassvolumen
- 70: Rückführvorrichtung

- DT: freier Querschnitt der Trichteröffnung
- DA: freier Querschnitt der Ablassöffnung
- DD: freier Querschnitt der Dosierschnecke

- E: Einsatzmaterial
- BF: Betriebsfüllstand
- WF: Wechselfüllstand
- F: Füllstand

## Patentansprüche

1. Extrusionsvorrichtung (10) für die Herstellung einer Kunststofffolie, aufweisend zumindest zwei Vorlagevorrichtungen (20) für die Vorlage von Einsatzmaterial (E) für einen Extruder (30), wobei jede Vorlagevorrichtung (20) wenigstens eine Ablassöffnung (50) aufweist mit einem Ablassverschluss (52) zum Öffnen und Verschließen der Ablassöffnung (50) und einer Behälterschnittstelle (54) für die reversible Befestigung eines Ablassbehälters (60) zum Aufnehmen von aus der jeweiligen Vorlagevorrichtung (20) abgelassenem Einsatzmaterial (E), **dadurch gekennzeichnet, dass** der Ablassbehälter (60) durch das Vorsehen der Behälterschnittstelle (54) während des Ablasses des Einsatzmaterials (E) aus der Vorlagevorrichtung (20) automatisch in der gewünschten Ablassposition verbleibt.

2. Extrusionsvorrichtung (10) nach Anspruch 1,
**dadurch gekennzeichnet,**
**dass** die Befestigungsschnittstelle (54) neben der Befestigung des Ablassbehälters (60) für die Befestigung einer Rückführvorrichtung (70) für die Rückführung von Einsatzmaterial (E) in ein Lager ausgebildet ist.

3. Extrusionsvorrichtung (10) nach einem der vorangegangenen Ansprüche,
**dadurch gekennzeichnet,**
**dass** die Ablassöffnung (50), der Ablassverschluss (52) und/oder die Behälterschnittstelle (54) eine Sensorvorrichtung (56) aufweisen für die Erkennung einer Belegung der Befestigungsschnittstelle (54).

4. Extrusionsvorrichtung (10) nach einem der vorangegangenen Ansprüche,
**dadurch gekennzeichnet,**
**dass** die Ablassöffnung (50) ausgebildet ist für eine Schwerkraftförderung beim Ablassen des Einsatzmaterials (E).

5. Extrusionsvorrichtung (10) nach einem der vorangegangenen Ansprüche,
**dadurch gekennzeichnet,**
**dass** jede Vorlagevorrichtung (20) eine Dosierschnecke (28) aufweist, wobei aus einer Trichteröffnung (23) eines Wägetrichters (22) das Einsatzmaterial (E) der Dosierschnecke (28) zugeführt wird und der freie Querschnitt (DT) der Trichteröffnung (23) zum freien Querschnitt (DA) der Ablassöffnung (50) ein Verhältnis zwischen 1:1 und 0,1:1 aufweist.

6. Extrusionsvorrichtung (10) nach einem der vorangegangenen Ansprüche,
**dadurch gekennzeichnet,**
**dass** die Vorlagevorrichtung (20) eine Dosierschnecke (28) aufweist und der freie Querschnitt (DA) der Ablassöffnung (50) größer oder gleich dem freien Querschnitt (DD) der Dosierschnecke (28) ist.

7. Extrusionsvorrichtung (10) nach einem der vorangegangenen Ansprüche,
**dadurch gekennzeichnet,**
**dass** an der Behälterschnittstelle (54) ein Ablassbehälter (60) reversibel befestigt ist mit einem Ablassvolumen (62) zur Aufnahme von Einsatzmaterial (E), welches Ablassvolumen (62) mit einem Wechselfüllstand (WF) in der Vorlagevorrichtung (20) im Verhältnis 1:1,2 bis 1:5 steht.

8. Extrusionsvorrichtung (10) nach einem der vorangegangenen Ansprüche,
**dadurch gekennzeichnet,**
**dass** die Ablassöffnung (50) und/oder der Ablassverschluss (52) hinsichtlich der Ablassgeschwindigkeit verstellbar ausgebildet sind.

9. Verfahren für das Ablassen eines Einsatzmaterials (E) aus den Vorlagevorrichtungen (20) einer Extrusionsvorrichtung (10) mit den Merkmalen eines der Ansprüche 1 bis 8, aufweisend die folgenden Schritte:
- Erkennen einer Wechselanforderung für das Ablassen des Einsatzmaterials (E),
- Befestigen eines Ablassbehälters (60) an der Befestigungsschnittstelle (54) der Ablassöffnung (50) einer Vorlagevorrichtung (20),
- Öffnen des Ablassverschlusses (52) der Ablassöffnung (50) mit dem befestigten Ablassbehälter (60),
- Wiederholen der beiden voranstehenden Schritte für wenigstens eine weitere Vorlagevorrichtung (20).

## Claims

1. An extrusion device (10) for producing a plastic film, the extrusion device comprising at least two feed devices (20) for feeding a feedstock (E) for an extruder (30), wherein each feed device (20) comprises least one discharge opening (50) having a discharge closure (52) for opening and closing the discharge opening (50) and a container interface (54) for reversibly fastening a discharge container (60) for receiving feedstock (E) discharged from the respective feed device (20), **characterized in that** the discharge container (60) automatically remains in the desired discharge position during the discharge of the feedstock (E) from the feed device (20) due to the provision of the container interface (54).

2. The extrusion device (10) according to claim 1,
**characterized in**
**that** the fastening interface (54) is designed, in addition to the fastening of the discharge container (60), for fastening a return device (70) for the return of feedstock (E) to a storage facility.

3. The extrusion device (10) according to any one of the preceding claims,
**characterized in**
**that** the discharge opening (50), the discharge closure (52) and/or the container interface (54) have a sensor device (56) for detecting an occupancy of the fastening interface (54).

4. The extrusion device (10) according to any one of the preceding claims,
**characterized in**
**that** the discharge opening (50) is designed for a gravity feed during the discharge of the feedstock (E).

5. The extrusion device (10) according to any one of the preceding claims,
**characterized in**
**that** each feed device (20) has a metering screw (28), wherein the feedstock (E) is fed to the metering screw (28) from a funnel opening (23) of the weighing funnel (22) and the free cross section (DT) of the funnel opening (23) to the free cross section (DA) of the discharge opening (50) has a ratio between 1:1 and 0.1:1.

6. The extrusion device (10) according to any one of the preceding claims,
**characterized in**
**that** feed device (20) has a metering screw (28) and the free cross section (DA) of the discharge opening (50) is greater than or equal to the free cross section (DD) of the metering screw (28).

7. The extrusion device (10) according to any one of the preceding claims,
**characterized in**
**that** a discharge container (60) is reversibly fastened to the container interface (54) with a discharge volume (62) for receiving feedstock (E), which discharge volume (62) is in a ratio of 1:1.2 to 1:5 with an alternating filling level (WF) in the feed device (20).

8. The extrusion device (10) according to any one of the preceding claims,
**characterized in**
**that** the discharge opening (50) and/or the discharge closure (52) are designed to be adjustable with regard to the discharge speed.

9. A method for discharging a feedstock (E) from the feed devices (20) of an extrusion device (10) having the features of any one of clams 1 to 8, comprising the following steps:
- detecting a change request for the discharge of the feedstock (E),
- fastening a discharge container (60) to the fastening interface (54) of the discharge opening (50) of a feed device (20),
- opening the discharge closure (52) of the discharge opening (50) with the fastened discharge container (60),
- repeating the two preceding steps for at least one further feed device (20).

## Revendications

1. Dispositif d'extrusion (10) pour la fabrication d'un film de matière plastique, comprenant au moins deux dispositifs d'alimentation (20) pour l'alimentation d'un matériau de charge (E) pour une extrudeuse (30), dans lequel chaque dispositif d'alimentation (20) comprend au moins une ouverture de vidange (50) avec une fermeture de vidange (52), pour l'ouverture et la fermeture de l'ouverture de vidange (50) et une interface de récipient (54) pour la fixation réversible d'un récipient de vidange (60) pour le logement du matériau de charge (E) sortant du dispositif d'alimentation (20) correspondant, **caractérisé en ce que** le récipient de vidange (60) reste automatiquement dans la position de vidange souhaitée grâce à la présence de l'interface de récipient (54) pendant la vidange du matériau de charge (E) hors du dispositif d'alimentation (20).

2. Dispositif d'extrusion (10) selon la revendication 1,
**caractérisé en ce que**
l'interface de fixation (54) est réalisée près de la fixation du récipient de vidange (60) pour la fixation d'un dispositif de retour (70) pour le retour du matériau de charge (E) dans un stockage.

3. Dispositif d'extrusion (10) selon l'une des revendications précédentes,
**caractérisé en ce que**
l'ouverture de vidange (50), la fermeture de vidange (52) et/ou l'interface de récipient (54) comprennent un dispositif de capteur (56) pour la détection d'une occupation de l'interface de fixation (54).

4. Dispositif d'extrusion (10) selon l'une des revendications précédentes,
**caractérisé en ce que**
l'ouverture de vidange (50) est conçue pour un transport par gravité lors de la vidange du matériau de charge (E).

5. Dispositif d'extrusion (10) selon l'une des revendications précédentes,
**caractérisé en ce que**
chaque dispositif d'alimentation (20) comprend une vis sans fin de dosage (28), dans lequel, à partir d'une ouverture de trémie (23) d'une trémie de pesée (22), le matériau de charge (E) est introduit dans la vis sans fin de dosage (28) et la section transversale libre (DT) de l'ouverture de trémie (23) présente, par rapport à la section transversale libre (DA) de l'ouverture de vidange (50), un rapport entre 1:1 et 0,1:1.

6. Dispositif d'extrusion (10) selon l'une des revendications précédentes,
**caractérisé en ce que**
le dispositif d'alimentation (20) comprend une vis sans fin de dosage (28) et la section transversale libre (DA) de l'ouverture de vidange (50) est supérieure ou égale à la section transversale libre (DD) de la vis sans fin de dosage (28).

7. Dispositif d'extrusion (10) selon l'une des revendications précédentes,
**caractérisé en ce que**
à l'interface de récipient (54), est fixé de manière réversible un récipient de vidange (60) avec un volume de vidange (62) pour le logement d'un matériau de charge (E), ce volume de vidange (62) présentant, avec un niveau de remplissage variable (WF) dans le dispositif d'alimentation (20), un rapport de 1:1,2 à 1:5.

8. Dispositif d'extrusion (10) selon l'une des revendications précédentes,
**caractérisé en ce que**
l'ouverture de vidange (50) et/ou la fermeture de vidange (52) sont réalisés de manière réglable en ce qui concerne la vitesse de vidange.

9. Procédé pour la vidange d'un matériau de charge (E) hors des dispositifs d'alimentation (20) d'un dispositif d'extrusion (10) avec les caractéristiques d'une des revendications 1 à 8, comprenant les étapes suivantes :
- détection d'une demande de changement pour la vidange du matériau de charge (E),
- fixation d'un récipient de vidange (60) à l'interface de fixation (54) de l'ouverture de vidange (50) d'un dispositif d'alimentation (20),
- ouverture de la fermeture de vidange (52) de l'ouverture de vidange (50) avec le récipient de vidange (60) fixé,
- répétition des deux étapes précédents pour au moins un autre dispositif d'alimentation (20).
